(19) **Europäisches Patentamt / European Patent Office / Office européen des brevets**

(11) **EP 2 876 520 B1**

(12) **EUROPEAN PATENT SPECIFICATION**

(45) Date of publication and mention
of the grant of the patent:
**28.04.2021 Bulletin 2021/17**

(51) Int Cl.:
*G05D 1/04* (2006.01)     *B63C 11/52* (2006.01)

(21) Application number: **14188094.8**

(22) Date of filing: **08.10.2014**

(54) **An altitude controlled profiler for use in coastal waters**

Höhengesteuerter Profiler zur Verwendung in Küstengewässern

Profileur contrôlé d'altitude destiné à être utilisé dans les eaux côtières

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2013 IN 2992DE2013**

(43) Date of publication of application:
**27.05.2015 Bulletin 2015/22**

(73) Proprietor: **COUNCIL OF SCIENTIFIC &
INDUSTRIAL RESEARCH
New Delhi 110001 (IN)**

(72) Inventors:
  • **Desa, Elgar Stephan**
    **403 004 Goa (IN)**
  • **Maurya, Pramod Kumar**
    **403 004 Goa (IN)**
  • **Dubey, Awanish Chandra**
    **403 004 Goa (IN)**
  • **Dabholkar, Nitin Anil**
    **403 004 Goa (IN)**
  • **Pascoal, Antonio Manuel dos Santos**
    **1049-001 Lisboa (PT)**

(74) Representative: **Gurney, Steven et al
Marks & Clerk LLP
62-68 Hills Road
Cambridge CB2 1LA (GB)**

(56) References cited:
**US-A- 5 995 882     US-A1- 2003 179 652**

• **ELGAR DESA ET AL: "In Situ Profiling of Eastern Arabian Sea Coastal Waters Using a New Autonomous Vertical Profiler", IEEE JOURNAL OF OCEANIC ENGINEERING, IEEE SERVICE CENTER, PISCATAWAY, NJ, US, vol. 38, no. 1, 1 January 2013 (2013-01-01), pages 43-54, XP011486017, ISSN: 0364-9059, DOI: 10.1109/JOE.2012.2209234**
• **BLIDBERG D R ET AL: "AUTONOMOUS UNDERWATER VEHICLES: CURRENT ACTIVITIES AND RESEARCH OPPORTUNITIES", ROBOTICS AND AUTONOMOUS SYSTEMS, ELSEVIER SCIENCE PUBLISHERS, AMSTERDAM, NL, vol. 7, no. 2 / 03, 1 August 1991 (1991-08-01), pages 139-150, XP000218583, ISSN: 0921-8890, DOI: 10.1016/0921-8890(91)90038-M**
• **SPIESS F ET AL: "Fine Scale Mapping Near the Deep Sea Floor", OCEANS '76, IEEE, PISCATAWAY, NJ, USA, 13 September 1976 (1976-09-13), pages 147-155, XP031634066,**
• **CADENA A ED - HOU WEILIN W ET AL: "Design and implementation of cooperative autonomous underwater vehicles for Antarctic exploration", OCEAN SENSING AND MONITORING III, SPIE, 1000 20TH ST. BELLINGHAM WA 98225-6705 USA, vol. 8030, no. 1, 13 May 2011 (2011-05-13), pages 1-12, XP060013599, DOI: 10.1117/12.887623 [retrieved on 1901-01-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION:

The present invention relates to an altitude Controlled Profiler for Coastal waters at any depth above the seabed using acoustic and pressure sensors. The field of invention belongs to Marine Robotics with applications to Environmental Monitoring & Oceanography. Altitude control will enable properties of the water column to be tracked at discrete depths, and will provide the means of being able to photograph the seabed, follow the terrain or to track phytoplankton blooms.

BACKGROUND ON THE INVENTION:

There are several types of profilers that have been designed for measuring vertical structure variables of the oceanic water column. Designs have used buoyancy pumps with drop weights, others are free falling gravity types dropped off the side of a ship, wire crawling profilers that crawl down or up a taut wire mooring aided by changes in ocean wave amplitudes, or dropped from a moving vessel by Pinkel et al (Pinkel, M. A. Goldin, J. A. Smith, O. M. Sun, A. A. Aja, M. N. Bui, and T. Hughen (2010) "The Wirewalker: A Vertically Profiling Instrument carrier Powered by Ocean Waves," J. Atmos. & Oceanic Technology, Vol. 28, pp. 426-435), Schwital and Roman (A. Schwithal and C. Roman (2009) "Development of a new Lagrangian float for studying coastal marine ecosystems," Oceans 2009 - Europe IEEE, pp. 1-6).

Reference may be made to Indian patent application number 0960DEL2007 titled "a portable apparatus and direct method for dose interval in-situ sectioning of unconsolidated aqueous sediments on the sea bed" inventor Anil Bhimrao Valsangkar describes a portable device for in-situ subsampling of aqueous sediments. This is particularly related to a portable device for dose interval in-situ sectioning of unconsolidated aqueous sediments, such as on the sea bed, from either near shore or deep-sea waters, from fresh water river, lake, reservoir, lagoon, estuary, and creek environment, or from the areas of similar water bodies elsewhere. This apparatus enables precise sectioning of the in-situ sediments on the bottom itself and can be used up to few millimeters level at desired intervals.

The present invention is based on a variable speed thruster driven profiler -U.S. Pat. 6,786.087 first conceptualized by Desa et al (2004) and then developed and known as the Autonomous Vertical Profiler [AVP] - an in-situ automated platform for profiling the vertical structure of coastal waters. The AVP is driven by a motor to a user programmed depth. It carries on-board wet sensors of salinity, temperature, chlorophyll-a, turbidity, and Dissolved Oxygen (DO) which sense these variables while it is in motion. After a dive, the profiler ascends to the sea surface under positive buoyancy only. On reaching the sea surface, the AVP transmits acquired high resolution (< 10crn) time stamped sensor profiles with its GPS coordinates over a high speed RF (Radio Frequency) link to users in a nearby ship/trawler or by satellite modern to a shore laboratory. It has been operated in near shore depths as small as 5m, in shelf waters as deep as 200m, and in water reservoirs and lakes. Further extensive references can also be found in Pat. 6,786,087 which contains a summary of most known profiler developments and their drawbacks. However, two recent profiler developments since our patent in 2004 having relevance to this invention need to be mentioned for the sake of completeness.

The Air Sea Interaction Profiler (ASIP) by Ward and Fristedt developed in 2008 is closely similar to the AVP but the thruster and sensors are located in opposite locations to that of the AVP. It also utilizes a thruster which drives it to a known depth where it is powered off. The ASIP ascends to the sea surface with positive buoyancy acquiring data from on-board sensors at one end of its long axis. The ASIP is targeted for research on air-sea interfacial and near surface processes in the 10m surface layer, although it can also be used for studying mixed layer processes down to a maximum depth of 100m. The major drawback of the ASIP is that it weighs close to 100kgs with long length of 2m and thus requires a special purpose ship with winch system and A-frame for deployment. Its large weight rules it out for routine profiling work in shallow coastal waters. Furthermore, it has no altitude or depth control capabilities.

The Lagrangian float by Schwithal & Roman has been used to obtain hydrographic data in estuaries and bays. It is driven by a piston pump that draws and expels surrounding water into a volume changer to alter its buoyancy. It can work in shallow waters ranging from 2m to 100m. The authors claim that it has the capability to hover at any depth or to drift above the seabed at a programmed altitude. The principal drawback of the float is dictated by the large settling times of the buoyancy engine which is of order of 10's of second often close to 100s for achieving steady state depth control. Other disadvantages of this float is dependence for operation on density and depth range requiring customized pumps for shallow or deep water operation, and the safety requirement of carrying a drop weight in case it is trapped in a neutral buoyancy zone.

The AVP described above in spite of several advantages over other profilers has some drawbacks that need to be identified before augmenting the device performance. For example:

1. The AVP is in continuous motion from the start to the end of a mission until it re-surfaces. This means that it can neither hover at any depth nor maintain altitude above the seabed as it has no control system to keep it stationary.

2. The AVP tends to overshoot the desired depth by as much as 3m at higher speeds after power to the thruster is switched off. This happens due to the momentum imparted to it by the thruster and the low moment of inertia of the device in the vertical plane.

3. Sensors having slow response times e.g. > 20s when fitted on the profiler do not respond fast enough to sample a given water layer properly as the profiler is in flight moving away from the water layer before the sensor has reached its steady slate value. To overcome this limitation, valid profiles can be obtained if the AVP is controlled to remain stationary at a discrete depth for a time equal to or greater than the settling time of the sensor before moving on to another depth.

4. The AVP cannot dynamically change its mission during a dive as it is designed to acquire a full profile of various variables without stopping flight.

US5995882 describes an autonomous underwater vehicle system for ocean science measurement and reconnaissance is about six feet long and 13 inches in diameter and includes various improvements which make turn-key, networkable, autonomous or tethered operation in aquatic environments possible. The improvements include a platform independent computer and I/O architecture which permits use of CISC or RISC CPUs and turn-key vehicle operation by persons unversed in computer programming, a floating launch and recovery frame which protects the vehicle and also provides for correct and safe vehicle assembly, an external battery charging port and high speed serial port with provision for optional control of the vehicle and data acquisition in real-time through connection of a lightweight electrically conducting tether, a four part hull assembly including an integrated strobe and antennae tower on the forward hull section which emerges from the water when the vehicle is at the surface, a modular, removable nose cone to carry sensors, and a motor mount which protects the main hull from flooding in the event of thruster failure, and flexible control surfaces with dive planes located on the forward hull and rudder fins on the stern hull section. These features are combined to produce a versatile and flexible platform for making oceanographic observations during complex behaviors executed by the vehicle and for providing duplex computer network connections when the vehicle is at the surface

The present invention obviates the drawbacks listed above by incorporating a an altitude and hover control system that results in an improved and more versatile AVP capable of transecting the water column in open loop, switching to hover control mode where it remains stationary for as long as required, and moving downwards where it is able to control its altitude above the seabed. This opens up the AVP to a host of new applications in oceanography by time tracking the interaction between physical processes and their influence on the biology of phytoplankton organisms, enabling seabed topography by photographic missions while drifting in a controlled constant altitude above the seabed using altitude control and an echo-sounder.

SUMMARY OF THE INVENTION:

The following examples/aspects/embodiments are not according to the invention and are present for illustration purposes only. The invention as such is set forth in the independent claim. In an embodiment of the present invention that augments the AVP an acoustic modem mounted one of the fixed fins near the rear cone is used to receive various commands from another acoustic modem located on a boat at the sea surface that will enable altitude control at any fixed height above the sea bed. In another embodiment of the present invention the acoustic modems can be used to issue commands to enable hover control at selected depth below the sea surface.

In yet another embodiment of the present invention, the acoustic modem link can be used to change mission objectives from uncontrolled dives to any depth before turning on the altitude or hover control functions as desired.

In further embodiment of the present invention, an upward looking echo-sounder is mounted on one of the fixed fins near the rear cone to measure wave activity on the sea surface while the profiler hovers at a fixed depth below the sea surface.

In one more embodiment of the present invention, the digital camera and a strobe light are positioned at opposite sides of the hull diameter so as to obtain underwater photographs with minimum backscatter.

BRIEF DESCRIPTION OF FIGURES:

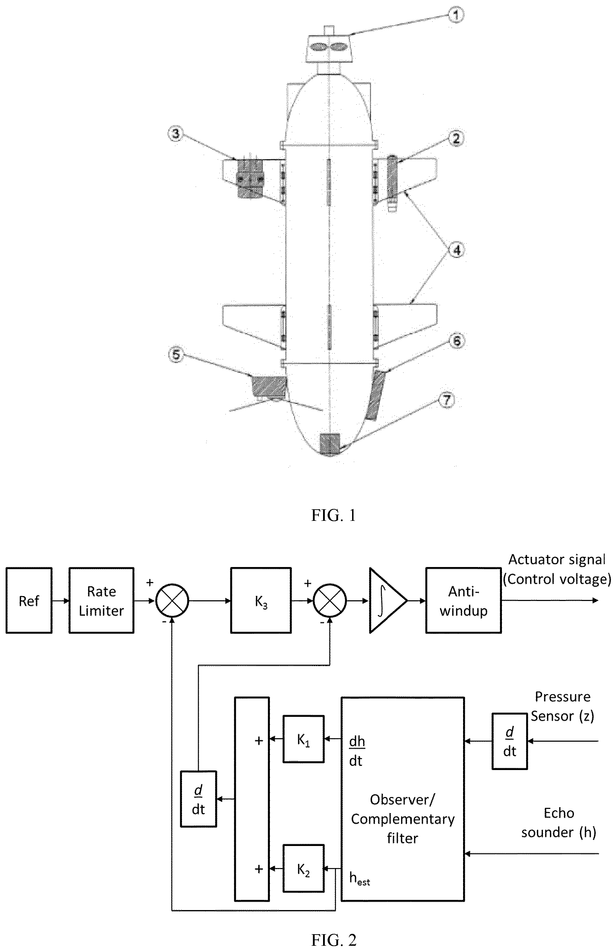

Fig. 1 represents a sectional view of the altitude controlled profiler for coastal waters. The profiler comprises or a thruster [1] whose thrust neutralizes the upwardly directed buoyant force so as to achieve altitude control. An echco-sounder [2] is mounted one or the rear fins and can be used to measure surface wave profiles in hover mode. An acoustic modem [3] is also mounted on another rear fin and can be used to communicate with the profiler from a surface craft. Extra fins [4] are used to minimize the rotation of the profiler about its own axis. A digital camera [5] and a strobe light [6] are secured at the nose cone opposite to each other and an echo-sounder [7] is mounted at the vertex of the nose cone.

Fig. 2 represents overall control system diagram of Altitude controller with feedback gains K1, K2, and K3 that are determined by using the LQR methodology. The rate emulates a low pass filter that rejects high frequency components in the reference. An integrator (labelled as ∫) placed close to the actuator removes biases in sensors and actuator.

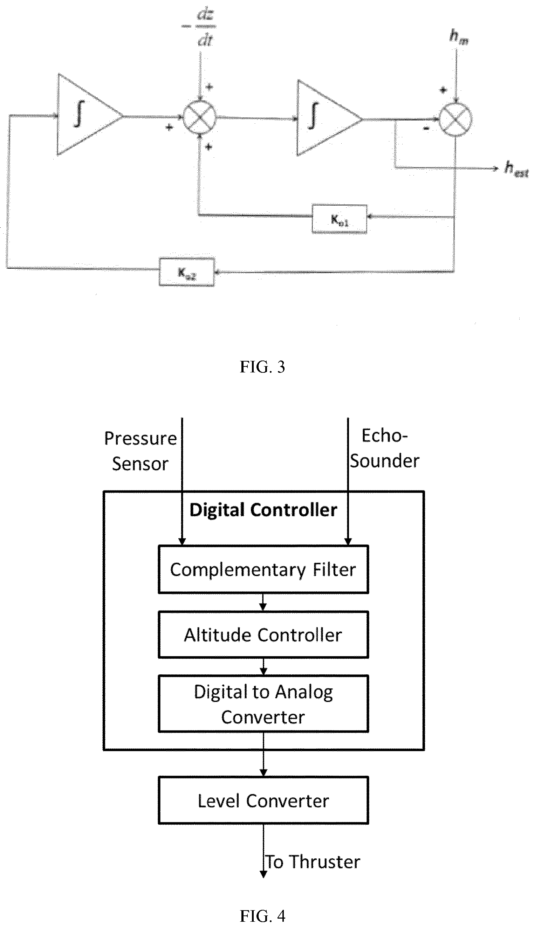

Fig. 3 represents the second order complementary filter with observer gains $K_{o1}$ and $K_{o2}$ (not to be confused with altitude gains K1, K2, and K3). The filter complements the altitude sensor ($h_m$) with time derivative of the pressure sensor (*-dz/dt*). Use of a simple threshold criterion enables the rejection of outliers in ecosounder.

Fig. 4 represents a block diagram of the electronics used to execute the control code. The output of the digital to analog converter goes through a level converter as input to the thruster.

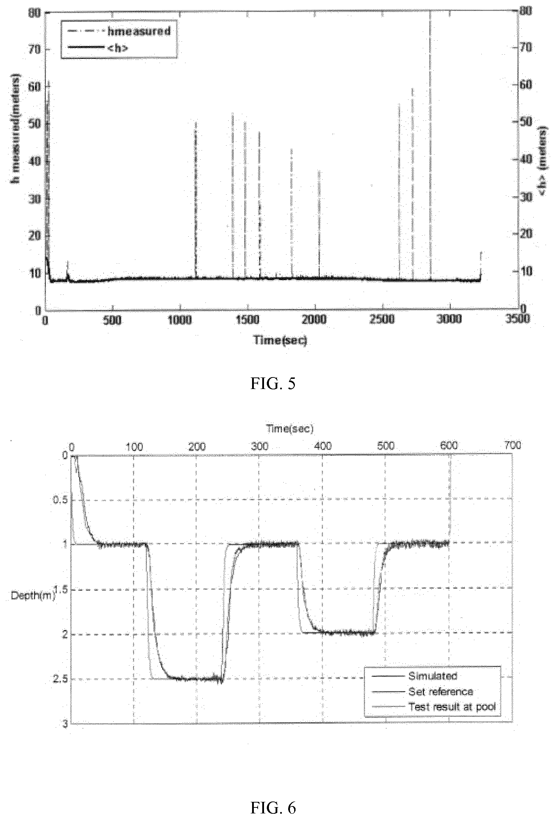

Fig. 5 represents a working example of a 3500s time record of an altitude control with complementary filter at an experimental site. The profiler was commanded to remain at an altitude of 6 m above the sea bed as shown by the solid line. All outlier signals from the echo-sounder shown as dashed spikes are rejected by the complementary filter.

Fig. 6 represents another working example of a 600s time record of the performance of a hover controller as It receives commands to hover at different depth levels (1m, 2.5m, 1m, 2m, and 1m) below the surface at an experimental site. The reference and simulated results matches the actual output closely.

DETAILED DESCRIPTION OF THE INVENTION:

It will be understood by those skilled in the art that the foregoing general description and the following detailed description are exemplary and explanatory of the invention and are not intended to be restrictive thereof. Throughout the patent specification, a convention employed is that in the appended drawings, like numerals denote like components.

Reference throughout this specification to "an embodiment", "another embodiment" or similar language means that a particular feature, structure, or characteristic described in connection with the embodiment is included in at least one embodiment of the invention. Thus, appearances of the phrase "in an embodiment", "in another embodiment" and similar language throughout this specification may, but do not necessarily, all refer to the same embodiment. The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures proceeded by "comprises, a" does not, without more constraints, preclude the existence of other devices or other sub-systems.

Some key embodiments of the invention are listed below:

In one embodiment, an altitude controlled profiler for use in coastal waters is provided. The altitude controlled profiler comprises: a thruster [1] whose thrust neutralizes upwardly directed buoyant force so as to achieve altitude control; an echo-sounder [2] mounted on one of rear fins and used to measure surface wave profiles in a hover mode; an acoustic modem [3] mounted on another rear fin and used to communicate with a profiler from a surface craft; extra fins [4] used to minimize rotation of the profiler about its own axis; a digital camera [5] and a strobe light (6) secured at a nose cone opposite to each other; and another echo-sounder [7] mounted at a vertex of the nose cone and being connected to electronic circuits.

In one embodiment, said echo-sounder and a depth sensor mounted on the nose cone of the profiler are connected to electronic circuits for receiving, storing, and processing data.

In one embodiment, the said profiler is also equipped with additional fixed fins [4] positioned externally on its body in such a manner as to minimize hydrodynamic torque exerted by the thruster on the profiler.

In one embodiment, said digital camera is being attached to a hull.

In one embodiment, said strobe light is also being attached to a hull but opposite to location of the digital camera.

In one embodiment, four extra fins (4) are attached near to the nose cone.

In one embodiment, the profiler rotates slowly about its own axis.

In one embodiment, the slow rotations of the profiler is used for video panning of seabed target area.

In one embodiment, a complementary filter is excluded and a pressure sensor is retained to operate in a hover control mode.

In one embodiment, acoustic modems mounted on the rear fins being used for communications with a user on a boat.

In one embodiment, a narrow beam echo sounder is mounted on a rear fin for the purpose of instantaneous wave recording.

In one embodiment, an altitude controller prevents the profiler from crashing into seabed.

These and other features and advantages will be more clearly understood from the following detailed description taken in conjunction with the accompanying drawings and claims.

The present invention exploits the balance of the thrust against buoyant forces on an existing Autonomous Vertical Profiler and uses this principle in a novel controller comprising of a Linear Quadratic Regulator (LQR) in combination with a complementary filter to provide augmented capabilities to the said profiler that enable it to maintain a user defined constant altitude above the seabed and by separate hover control maintain a constant depth below the sea surface with both controllers utilizing sensors of echo-sounder and depth mounted on the nose cone of the profiler that are connected to electronic circuits for receiving, storing and processing data; the said profiler is also equipped with additional fixed fins positioned externally on its body in such a manner as to minimize the hydrodynamic torque exerted by the thruster on the said profiler.

The main object of the present invention is to augment an existing Autonomous Vertical Profiler [AVP] that has been described above by providing it with additional capabilities of altitude control so as maintain a fixed distance above the seabed by equalizing the motor thrust to the opposing positive buoyancy of the AVP.

Another object of the invention is to provide the AVP the means to hover by balancing its upward buoyancy against the motor thrust so as to maintain itself, at any depth below the sea surface using a depth controller.

Still another object of the present invention is to attach a digital camera to the hull of the profiler so as to record still and video images of the seabed when altitude control is in operation.

Yet another object of the present invention is to position a strobe light on the AVP body in such a manner so as to illuminate the field or view or the target object to be photographed by the camera while ensuring that the optical backscatter from the water layers near the seabed is minimized.

Another object of the present invention is to provide the means to minimize the rotation of the AVP by mounting an extra pair of static fins near the nose cone in addition to a pair of fins near the thruster.

Still another object of the present invention is to track changes in the depth position of the phytoplankton maximum concentration by measuring the slope of the chlorophyll sensor profile so as to determine the first turning point, and then to position the AVP at that point by measuring its chlorophyll concentration in time.

Yet another object of the present invention is to record the changes in seabed topography by using an untethered freely drifting AVP under altitude control.

THE MAIN ADVANTAGES OF THE PRESENT INVENTION:

1. The device of the present invention invests the AVP with a means to control its altitude above the seabed from depths ranging from 5m to 200m of coastal waters.

2. A digital camera and strobe attached on opposite sides of the nose cone diameter of the profiler (fig.1) can be used to acquire optical photographs of the sea bed when the profiler is enabled for altitude control.

3. The steady slow rotations of the profiler about its axis created by the hydrodynamic torque from the thruster rotor can be usefully exploited to do a video panning of the seabed target area from a constant altitude.

4. Sensors with slow response time of the order ~1s or more can be usefully employed to track changes in the time evolution of variables in the sea using the hover control capability of the profiler.

5. Use of acoustic modem link between the user and the profiler enable changes in mission objectives from altitude control to hover control or to no control.

6. The altitude controller on the device invests it with automatic safety feature that will prevent it from ever crashing into the seabed.

7. Two or more units of the present invention if located several kilometers apart, can be synchronized to dive simultaneously using GPS time, and thereby to study spatial changes in ecosystem variables.

BEST MODE OF PERFORMING ALTITUDE CONTROL JN THE INVENTION:

The present invention provides for a thruster driven profiler, which can maintain a fixed altitude above the seabed. The method of arresting the motion of the profiler at any depth uses a control system to adjust the downward thrust of the motor so as to equalize the upward acting buoyant force. The hardware for altitude control comprises of a thruster that is mounted ex1ernally at one end of a cylindrical casing toward the tail cone, a pressure sensor mounted on the end plate behind the nose cone, and an echo-sounder at the vertex of the nose cone (see Fig.1). It also comprises a low power computer that implements the altitude and hover control by sampling the echo- sounder and depth sensor outputs (see Fig.4). The general equation of motion which governs the dynamics of the present device is expressed as:

$$F_{ext} = F_d + F_{prop} + F_{add} + F_{HS} \qquad (1)$$

where $F_{ext}$, is the net force acting in positive z direction with increasing depth, $F_d$ is drag force, $F_{prop}$ is thrust force exerted by the thruster propeller, $F_{add}$ is the force due to the added mass effect, and $F_{HS}$ is buoyant force acting at all times on the device.

Equation (1) is non-linear. In order to simplify the model, it has been linearized about an equilibrium point where the velocity of the profiler is zero when altitude control is achieved. A linearized plant model can be expressed as -

$$\dot{u} = F_{prop}/m + (B-W)/m \qquad (2)$$

$$\dot{z} = u \qquad (3)$$

where [u, z] is the state vector, B the buoyancy, and W and m are the weight and mass respectively. The controller is designed by including an augmented state variable namely, the time integral of depth variable ($\int z.dt$) in the control loop which results in removal of steady state error cause by the constant buoyancy (Fig.2). A non-obvious approach in implementing the altitude controller is to place the integrator as close as is possible to the plant input enabling it to remove biases from buoyancy and sensors. The final control law is:

$$\delta = \int [(-K3)(Ref - h) - d/dt((-K1)\tfrac{dh}{dt} + (-K2)*h)]dt \qquad (4)$$

Also an anti-windup scheme is used to switch off the integrator when the actuator is saturated. The gains K1, K2, and K3 are obtainable by tuning the weights on each of the states using the Linear Quadratic method that minimizes the cost function J given by -

$$J = \int_0^\infty z(t)^T Q z(t) + \rho u(t)^T R u(t) dt$$

Q and R are the weighting matrices, z is the state of the plant and u is the input. It is assumed that the desired state of the model is zero at the equilibrium position but non zero at the initial condition. Thus the matrix Q penalizes the state error in a mean square sense. Similarly, the matrix R penalizes the control effort, i.e., limits the control signal magnitude. When the gains K1, K2, K3 are tuned as indicated, stability of closed loop control is obtained. However, the echo-sounder which measures altitude of the AVP above the seabed also receives spurious echo returns from multipath reflections termed here as outliers. In order to reject outliers a complementary filter was designed and implemented in the feedback loop. This filter is labeled as Observer/Complementary filter in Fig. 2 and detailed in Fig. 3. The complementary filter of Fig. 3 reads altitude from the echo-sounder and complements it with negative time derivative of depth measured by the pressure sensor. If the difference between the estimated output from the complementary filter and the measured altitude is greater than say a threshold value (~2m) the feedbacks are suppressed and estimated altitude is a result of simple integration of - dz/dt used for the purpose of control.

A hover control system can be designed along the same lines as the altitude control as presented above excluding the echo-sounder and the complementary filter but including as before the pressure sensor and the same approach based on the Linear Quadratic Regulator technique.

**Claims**

1. An altitude controlled profiler for use in coastal waters, comprising:

    a thruster [1] and an altitude controller configured to control altitude, wherein a thrust of the thruster [1] neutralizes upwardly directed buoyant force and the altitude controller is configured to maintain a user defined constant altitude above sea bed;
    an upward looking echo-sounder [2] mounted on one of rear fins and used to measure surface wave profiles in a hover mode;
    a pressure sensor provided at an end-plate behind a nose-cone to operate in the hover mode;
    an acoustic modem [3] mounted on another rear fin and used to communicate with a profiler from a surface craft;
    extra fins [4] used to minimize rotation of the profiler about its own axis;
    a digital camera [5] and a strobe light (6) secured at the nose cone and diametrically opposite to each other; and
    a second echo-sounder [7] mounted at a vertex of the nose cone and being connected to electronic circuits, wherein the altitude controller is coupled to the second echo-sounder for receiving altitude information, and coupled to the pressure sensor for receiving pressure information, **characterised in that** the altitude controller comprising:

    a Linear Quadratic Regulator (LQR) configured to provide a low pass filter that rejects high frequency components;
    an integrator placed close to the thruster (1) configured to remove biases in the pressure sensor and the thruster (1); and
    a second order complementary filter in a feedback loop, configured for complimenting altitude information from the echo-sounder [7] with negative time derivative (-dz/dt) of depth measured from the pressure sensor for enabling the rejection of measured altitude readings where the difference between the estimated output from the complementary filter and the measured altitude is greater than a threshold value, and

    wherein the controller is coupled to the thruster and configured to control the thruster motor in response to altitude and pressure information in order to adjust downward motor-thrust to neutralize upwardly directed buoyant force to maintain the user defined constant altitude above sea bed.

2. The altitude controlled profiler as claimed in claim 1, wherein said echo-sounder and a depth sensor mounted on the nose cone of the profiler are connected to electronic circuits for receiving, storing, and processing data, and wherein the upward looking echo sounder (2) is configured to provide instantaneous measurement of the wave profiles of the sea surface for receiving and storing by electronic-circuits.

3. The altitude controlled profiler as claimed in claim 1, wherein the said profiler is also equipped with additional fixed fins [4] positioned externally on its body, the additional fixed fins being adapted to minimize hydrodynamic torque exerted by the thruster on the profiler.

4. The altitude controlled profiler as claimed in claim 1, wherein said digital camera is being attached to a hull.

5. The altitude controlled profiler as claimed in claim 4, wherein said strobe light is also being attached to the hull but opposite to location of the digital camera for minimizing optical backscatter.

6. The altitude controlled profiler as claimed in claim 1, wherein the profiler is adapted to rotate about its own axis

7. The altitude controlled profiler as claimed in claim 6, wherein the rotation of the profiler is used for video panning of seabed target area.

8. The altitude controlled profiler as claimed in claim 1, wherein the acoustic modem mounted on the rear fin is coupled to the electronic circuits for data acquisition, the acoustic modem for communicating with a user on a boat.

9. The altitude controlled profiler as claimed in claim 1, wherein the narrow beam echo sounder is mounted on a rear fin for the purpose of instantaneous wave recording .

**Patentansprüche**

1. Höhengesteuerter Profiler zur Verwendung in Küstengewässern, Folgendes umfassend:

ein Triebwerk (1) und eine Höhensteuerung, welche zur Höhensteuerung konfiguriert ist, wobei eine Schubkraft des Triebwerks (1) eine nach oben gerichtete Auftriebskraft neutralisiert und die Höhensteuerung konfiguriert ist, um eine benutzerdefinierte konstante Höhe über den Meeresboden zu halten;
ein aufschauendes Echolot (2), welches auf eine Heckfinne montiert ist und verwendet wird, um Oberflächenwellenprofile in einem Schwebemodus zu messen;
einen Drucksensor, welcher an einer Endplatte hinter einem Bugkonus bereitgestellt ist, um im Schwebemodus zu arbeiten;
ein akustisches Modem (3), welches auf einer anderen Heckfinne montiert ist und verwendet wird, um mit einem Profiler von einem Überwasserfahrzeug zu kommunizieren;
zusätzliche Finnen (4), welche verwendet werden, um die Drehung des Profilers um seine eigene Achse zu minimieren;
eine Digitalkamera (5) und ein Stroboskoplicht (6), welche an dem Bugkonus auf diametral gegenüberliegenden Seiten befestigt sind; und
ein zweites Echolot (7), welches an einer Spitze des Bugkonus montiert ist und mit elektronischen Schaltungen verbunden ist,
wobei die Höhensteuerung mit dem zweiten Echolot gekoppelt ist, um Höheninformationen zu empfangen und mit dem Drucksensor gekoppelt ist, um Druckinformationen zu empfangen,
**dadurch gekennzeichnet, dass** die Höhensteuerung Folgendes umfasst:

einen linearen quadratischen Regler (LQR), welcher konfiguriert ist, um einen Tiefpassfilter bereitzustellen, welcher Hochfrequenzkomponenten herausfiltert;
einen Integrator, welcher in der Nähe des Triebwerks (1) angeordnet ist, welcher konfiguriert ist, um Abweichungen in dem Drucksensor und in dem Triebwerk (1) zu entfernen; und
einen komplementären Filter zweiter Ordnung in einer Rückkopplungsschleife, welcher konfiguriert ist, um Höheninformationen von dem Echolot (7) mit negativen Zeitableitungen (-dz/dt) der Tiefe zu komplementieren, welche vom Drucksensor gemessen wird, um das Herausfiltern von gemessenen Höhenablesungen zu ermöglichen, wo der Unterschied zwischen der geschätzten Ausgabe aus dem komplementären Filter und der gemessenen Höhe größer als ein Schwellenwert ist, und

wobei die Steuerung mit dem Triebwerk gekoppelt ist und konfiguriert ist, um den Triebwerkmotor als Reaktion auf Höhen- und Druckinformationen zu steuern, um die nach unten gerichtete Motorschubkraft einzustellen, um die nach oben gerichtete Auftriebskraft zu neutralisieren, um die benutzerdefinierte konstante Höhe über den Meeresboden aufrechtzuerhalten.

2. Höhengesteuerter Profiler nach Anspruch 1, wobei das Echolot und ein Tiefensensor, der auf dem Bugkonus des Profilers montiert ist, mit elektronischen Schaltungen verbunden sind, um Daten zu empfangen, zu speichern und zu verarbeiten, und wobei das aufschauende Echolot (2) konfiguriert ist, um eine augenblickliche Messung der Wellenprofile der Meeresfläche bereitzustellen, die von den elektronischen Schaltungen empfangen und gespeichert wird.

3. Höhengesteuerter Profiler nach Anspruch 1, wobei der Profiler zudem mit zusätzlichen festen Finnen (4) versehen ist, welche auf der Außenseite seines Körpers angeordnet sind, wobei die zusätzlichen festen Finnen ausgebildet sind, um ein hydrodynamisches Drehmoment zu minimisieren, welches durch das Triebwerk auf den Profiler ausgeübt wird.

4. Höhengesteuerter Profiler nach Anspruch 1, wobei die Digitalkamera an einem Rumpf befestigt ist.

5. Höhengesteuerter Profiler nach Anspruch 4, wobei das Stroboskoplicht ebenfalls an dem Rumpf befestigt ist, jedoch an einer gegenüberliegenden Stelle im Verhältnis zur Digitalkamera, um eine optische Rückstreuung zu minimieren.

6. Höhengesteuerter Profiler nach Anspruch 1, wobei der Profiler ausgebildet ist, um um seine eigene Achse zu drehen.

7. Höhengesteuerter Profiler nach Anspruch 6, wobei die Drehung des Profilers zum Video-Panen des Zielbereichs auf dem Meeresboden verwendet wird.

**8.** Höhengesteuerter Profiler nach Anspruch 1, wobei das akustische Modem, welches auf der Heckfinne montiert ist, mit den elektronischen Schaltungen zur Datenerfassung gekoppelt ist, wobei das akustische Modem zum Kommunizieren mit einem Benutzer auf einem Bootdient dient.

**9.** Höhengesteuerter Profiler nach Anspruch 1, wobei das Engstrahl-Echolot auf einer Heckfinne montiert ist, um augenblicklich Wellen aufzuzeichnen.

**Revendications**

**1.** Profileur commandé en altitude pour une utilisation dans des eaux côtières, comprenant :

un propulseur (1) et un dispositif de commande d'altitude configuré pour commander l'altitude, dans lequel une propulsion du propulseur (1) neutralise une force de flottabilité dirigée vers le haut et le dispositif de commande d'altitude est configuré pour maintenir une altitude constante définie par un utilisateur au-dessus du fond de la mer,
un échosondeur (2) dirigé vers le haut monté sur l'un des ailerons arrière et utilisé pour mesurer des profils de vague de surface dans un mode stationnaire,
un capteur de pression agencé sur un flasque derrière un cône de nez pour fonctionner dans le mode stationnaire,
un modem acoustique (3) monté sur un autre aileron arrière et utilisé pour communiquer avec un profileur d'un bateau de surface,
des ailerons supplémentaires (4) utilisés pour minimiser la rotation du profileur autour de son propre axe,
une caméra numérique (5) et une lumière stroboscopique (6) fixées sur le cône de nez et diamétralement opposées l'une à l'autre, et
un second échosondeur (7) monté sur un sommet du cône de nez et étant connecté à des circuits électroniques, dans lequel le dispositif de commande d'altitude est couplé au second échosondeur pour recevoir des informations d'altitude et couplé au capteur de pression pour recevoir des informations de pression,
**caractérisé en ce que** le dispositif de commande d'altitude comprend :

un régulateur quadratique linéaire (LQR) configuré pour fournir un filtre passe-bas qui rejette des composantes de haute fréquence,
un intégrateur placé à proximité du propulseur (1), configuré pour éliminer des distorsions dans le capteur de pression et le propulseur (1), et
un filtre complémentaire de second ordre dans une boucle de rétroaction, configuré pour complémenter des informations d'altitude issues de l'échosondeur (7) avec une dérivée négative en temps (-dz/dt) de la profondeur mesurée à partir du capteur de pression pour permettre le rejet des relevés d'altitude mesurée où la différence entre la sortie estimée à partir du filtre complémentaire et l'altitude mesurée est supérieure à une valeur seuil, et

dans lequel le dispositif de commande est couplé au propulseur et configuré pour commander le moteur de propulseur en réponse à des information d'altitude et de pression pour régler la propulsion du moteur vers le bas pour neutraliser une force de flottabilité dirigée vers le haut pour maintenir l'altitude constante définie par un utilisateur au-dessus du fond de la mer.

**2.** Profileur commandé en altitude selon la revendication 1, dans lequel ledit échosondeur et un capteur de profondeur monté sur le cône de nez du profileur sont connectés à des circuits électroniques pour recevoir, stocker et traiter des données, et dans lequel l'échosondeur dirigé vers le haut (2) est configuré pour fournir une mesure instantanée des profils de vague de la surface de la mer à recevoir et à stocker par des circuits électroniques.

**3.** Profileur commandé en altitude selon la revendication 1, dans lequel ledit profileur est également équipé d'ailerons fixes additionnels (4) positionnés à l'extérieur sur son corps, les ailerons fixes additionnels étant adaptés pour minimiser un couple hydrodynamique exercé par le propulseur sur le profileur.

**4.** Profileur commandé en altitude selon la revendication 1, dans lequel ladite caméra numérique est fixée à une coque.

**5.** Profileur commandé en altitude selon la revendication 4, dans lequel ladite lampe stroboscopique est également fixée à la coque, mais à un emplacement opposé à celui de la caméra numérique pour minimiser la rétrodiffusion optique.

**6.** Profileur commandé en altitude selon la revendication 1, dans lequel, le profileur est adapté pour tourner autour de son propre axe.

**7.** Profileur commandé en altitude selon la revendication 6, dans lequel la rotation du profileur est utilisée pour un panoramique vidéo d'une zone cible du fond de la mer.

**8.** Profileur commandé en altitude selon la revendication 1, dans lequel le modem acoustique monté sur l'aileron arrière est couplé aux circuits électroniques pour une acquisition de données, le modem acoustique servant àpour communiquer avec un utilisateur sur un bateau.

**9.** Profileur commandé en altitude selon la revendication 1, dans lequel l'échosondeur à faisceau étroit est monté sur un aileron arrière à des fins d'enregistrement instantané de vague.

FIG. 1

FIG. 2

$$-\frac{dz}{dt}$$

$$h_m$$

$$h_{est}$$

$$K_{o1}$$

$$K_{o2}$$

FIG. 3

Pressure Sensor

Echo-Sounder

**Digital Controller**

Complementary Filter

Altitude Controller

Digital to Analog Converter

Level Converter

To Thruster

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 0960DEL2007
- US 6786087 B

- WO 6786087 A
- US 5995882 A

**Non-patent literature cited in the description**

- **PINKEL, M. A. GOLDIN ; J. A. SMITH ; O. M. SUN ; A. A. AJA ; M. N. BUI ; T. HUGHEN.** The Wirewalker: A Vertically Profiling Instrument carrier Powered by Ocean Waves. *J. Atmos. & Oceanic Technology,* 2010, vol. 28, 426-435

- **A. SCHWITHAL ; C. ROMAN.** Development of a new Lagrangian float for studying coastal marine ecosystems. *Oceans 2009 - Europe IEEE,* 2009, 1-6